# EUROPEAN PATENT APPLICATION

(11) **EP 4 830 847 A1**
(43) Date of publication of application: **28.10.2026**
(21) Application number: 24908088.8
(22) Date of filing: 18.12.2024
(51) Int. Cl.: B21D 37/16, B21D 22/02, C23C 2/28, C23C 2/12, C25D 5/50, C25D 3/56, C23C 2/40, C23C 2/00, H05B 6/00

(54) **COATED STEEL SHEET FOR HOT FORMING AND METHOD OF MANUFACTURING SAME AND MANUFACTURING METHOD OF HOT PRESS FORMED MEMBER**

(30) Priority: 18.12.2023 KR 20230184404; 23.07.2024 KR 20240097086; 17.12.2024 KR 20240189353
(71) Applicant: POSCO Co., Ltd, Gyeongsangbuk-do 37859 (KR)
(72) Inventor: JUNG, Woo-Sung, Gwangyang-si, Jeollanam-do 57807 (KR); KIM, Hong-Gee, Incheon 21985 (KR); LEE, Kang-Min, Gwangyang-si, Jeollanam-do 57807 (KR); OH, Ji-Eun, Gwangyang-si, Jeollanam-do 57807 (KR); KWON, Seong-Choon, Gwangyang-si, Jeollanam-do 57807 (KR); HWANG, Hyeon-Seok, Gwangyang-si, Jeollanam-do 57807 (KR); PAIK, Doo-Jin, Gwangyang-si, Jeollanam-do 57807 (KR); SON, Hyun-Sung, Incheon 21985 (KR); BOK, Hyun-Ho, Incheon 21985 (KR); OH, Kyung-Seok, Incheon 21985 (KR)
(74) Representative: Meissner Bolte Partnerschaft mbB
(86) International application number: PCT/KR2024/020646
(87) International publication number: WO 2025/135805

(57) **Abstract**

One aspect of the present invention provides a coated steel sheet for hot forming, a method of manufacturing same, and a manufacturing method of a hot press formed member. One preferred aspect of the present invention provides a coated steel sheet for hot forming, a method of manufacturing same, and a manufacturing method of a hot press formed member, wherein productivity is excellent and it is possible to reduce manufacturing costs.

## Description

### Technical Field

The present disclosure relates to a coated steel sheet for hot forming, a method for manufacturing the same, and a method for manufacturing a hot press formed member.

### Background Art

As efforts to improve fuel efficiency through automobile weight reduction have continued, the use of ultra-high-strength steel for hot forming has become widespread along with the trend toward increasingly stringent crash safety regulations and enhanced passenger safety.

When uncoated steel is applied as such a steel for hot press forming, scale may be generated, or it may be difficult to ensure corrosion resistance, and thus there has been a trend toward applying coated steel instead of the uncoated steel. In addition, aluminum-coated steel has generally been applied in most cases as the coated steel.

For example, in order to prevent formation of surface oxide scale and decarburization occurring during a process of heating a steel sheet to a high temperature of 850°C or higher, use of an aluminum-silicon (Al-Si) coating was first proposed by ArcelorMittal and achieved commercial success.

However, as described above, in a steel sheet including a coating layer containing Al as a main component, the Al coating layer is liquefied as the steel sheet is heated to a temperature equal to or higher than a melting point of the Al coating layer in a heating furnace during a heat treatment process for hot forming, and thus there is a problem in that Al is fused to a roll in the heating furnace. In particular, as such a problem of melting of the coating layer becomes more serious when a temperature rise rate of the heat treatment is increased in order to improve productivity, or during heating through induced current, which has excellent heating efficiency and enables rapid heating, there is a limitation in shortening a time required for the heat treatment through rapid heating. In addition, in order to austenitize the steel sheet without melting of the Al coating layer, the steel sheet should be heated to 900°C or higher, and thus there is a need to alloy the Al coating layer into an AlFe alloy during heating. Accordingly, since a section corresponding to 30 to 50% of the entire heating furnace has to be used for AlFe alloying, the length of the heating furnace increases, which may cause problems such as high energy consumption and generation of CO₂ in the manufacturing process.

In order to solve such problems, the conventional technologies have proposed a method of increasing a melting point of a coating layer by forming an aluminum-iron (Al-Fe) alloy phase through interdiffusion between the Al coating layer and a steel sheet (Fe) by performing a separate alloying annealing heat treatment before a heat treatment for hot forming, thereby preventing the problem of fusion adhesion of Al and enabling rapid heating to increase productivity. However, when such a pre-alloying heat treatment is performed, market competitiveness is lowered due to an increase in manufacturing costs. In particular, since the pre-alloying heat treatment is also performed at a temperature lower than the melting point of the coating layer so that melting of the coating layer does not occur, a long time of several to several tens of hours is required until the coating layer is completely alloyed, and there is a problem in that deterioration in surface quality and coating properties occurs due to continuous oxidation of the coating layer during the heat treatment process. In addition, when partial alloying, in which only a portion of the coating layer is alloyed rather than complete alloying, is performed in order to reduce the alloying heat treatment time, there still remains a possibility that the unalloyed coating layer will melt during rapid heating and cause roll sticking.

In other conventional technologies, a method has been proposed in which alloying annealing is performed simultaneously with coating an aluminum alloy in a continuous hot-dip coating line, thereby enabling improvement in productivity during hot forming while lowering manufacturing cost. However, in order to increase a diffusion rate between the aluminum coating layer and the steel sheet, a content of Si, which inhibits an aluminum-iron diffusion reaction, is limited to 0.4 to 4%. When the content of Si is lowered as described above, a melting point of an aluminum-silicon molten bath increases, and a large amount of fume is generated during continuous hot-dip coating, thereby decreasing productivity and increasing line maintenance and repair costs. In addition, there is a problem in that surface defects such as surface flow patterns increase due to a decrease in fluidity of the molten bath, and problems such as peeling of the coating layer during forming and die sticking increase due to an increase in a brittle alloy layer after hot forming.

Meanwhile, since the aluminum-coated steel undergoes alloying during a heating process, a heating rate is abruptly slowed within a specific temperature range, which causes a problem in that heating time becomes longer, and thus a solution thereto is also required.

### Summary of Invention

### Technical Problem

An aspect of the present disclosure is to provide a coated steel sheet for hot forming, a method for manufacturing the same, and a method for manufacturing a hot press formed member.

A preferred aspect of the present disclosure is to provide a coated steel sheet for hot forming, a method for manufacturing the same, and a method for manufacturing a hot press formed member, all of which may achieve excellent productivity as well as a reduction in manufacturing costs.

The object of the present disclosure is not limited to the above description. Those skilled in the art to which the present disclosure pertains will have no difficulty in understanding additional objects of the present disclosure from the overall contents of the present specification.

### Solution to Problem

According to a first aspect of the present disclosure, a coated steel sheet for hot forming includes: a base steel sheet; and a coating layer formed on at least one surface of the base steel sheet, wherein the coating layer includes: a first layer including a Fe₂Al₅ phase; and a second layer formed on the first layer and including a FeAl₃ phase, and an AlSiFe intermetallic compound (τ phase) is continuously or discontinuously present within the first layer.

The coating layer may contain, by wt%, 6 to 15% of Si, 20 to 60% of Fe, and a balance of Al and other inevitable impurities.

The coating layer may have an average thickness of 7 to 30 µm.

The coating layer may have a whiteness of 60 or less and a glossiness of 6.0 or less.

According to a second aspect of the present disclosure, a coated steel sheet for hot forming includes: a base steel sheet; and a coating layer formed on at least one surface of the base steel sheet, wherein the coating layer includes: a first layer containing, by wt%, 40 to 48% of Al, 49 to 55% of Fe, and 5% or less of Si; a second layer formed on the first layer and containing, by wt%, 40 to 50% of Al, 38 to 48% of Fe, and 2 to 12% of Si; a third layer formed on the second layer and containing, by wt%, 45 to 60% of Al, 33 to 48% of Fe, and 7% or less of Si; and a fourth layer formed on the third layer and containing, by wt%, 50 to 65% of Al, 25 to 35% of Fe, and 15% or less of Si.

The coating layer may contain, by wt%, 6 to 15% of Si, 20 to 60% of Fe, and a balance of Al and other inevitable impurities.

The first layer may include a Fe₂Al₅ phase, the second layer may include an AlSiFe intermetallic compound (τ phase), the third layer may include a Fe₂Al₅ phase, and the fourth layer may include a FeAl₃ phase.

The second layer may be present in a region within 40% of an overall average thickness (T) of the coating layer in a thickness direction from a lower portion of the coating layer.

A ratio (T1/T) of a total average thickness (T1) of the first layer, the second layer, and the third layer to an overall average thickness (T) of the coating layer may be 0.20 to 0.50.

A ratio (T2/T) of an average thickness (T2) of the fourth layer to an overall average thickness (T) of the coating layer may be 0.50 to 0.80.

The coating layer may have an average thickness of 7 to 30 µm.

The coating layer may have a whiteness of 60 or less and a glossiness of 6.0 or less.

According to a third aspect of the present disclosure, a method for manufacturing a coated steel sheet for hot forming includes: preparing a base steel sheet; immersing the base steel sheet in a plating bath to form a coating layer on at least one surface of the base steel sheet and obtain a coated steel sheet; subjecting the coated steel sheet to a diffusion annealing heat treatment; and cooling the coated steel sheet subjected to the diffusion annealing heat treatment, wherein the diffusion annealing heat treatment is performed at 650 to 850°C for 3.0 to 20.0 seconds, the cooling includes first cooling to a first cooling end temperature of 600°C and subsequently second cooling to a second cooling end temperature lower than 600°C, and a cooling rate during the first cooling is slower than a cooling rate during the second cooling.

The plating bath may contain, by wt%, 6 to 15% of Si, 0.1 to 2.0% of Fe, and a balance of Al and other inevitable impurities.

The diffusion annealing heat treatment may be performed by induction heating.

The cooling rate during the first cooling may be 0.9 to 21°C/s, and the cooling rate during the second cooling may be 12 to 60°C/s.

According to a fourth aspect of the present disclosure, a method for manufacturing a hot press formed member includes heating a coated steel sheet for hot forming, wherein the heating is performed so that X represented by the following [Equation 1] is 1.50°C/s or less:
[Equation 1] $X = A - B$
where, in [Equation 1], A is a heating rate at 600°C calculated from a straight line obtained by linearly fitting the heating rate in a temperature range between 300°C and 550°C, and B is a heating rate at 600°C calculated from a straight line obtained by linearly fitting the heating rate in a temperature range between 600°C and 700°C.

The coated steel sheet for hot forming may satisfy one or more of the following (a) to (c):
(a) the coated steel sheet for hot forming includes: a base steel sheet; and a coating layer formed on at least one surface of the base steel sheet, and the coating layer contains, by wt%, 6 to 15% of Si, 20 to 60% of Fe, and a balance of Al and other inevitable impurities;
(b) the coating layer has a single-side coating weight of 30 g/m² or less; and
(c) the coating layer has a whiteness of 60 or less.

X may be 0°C/s or more and 1.50°C/s or less.

The heating may be performed so that a cumulative value (Y) of a coating layer alloying history index at 550°C represented by the following [Equation 2] is 0.14 or less: [Equation 2] $\begin{matrix}Cumulative value \left(Y\right) of coating layer alloying \\ history index = {\sum }_{i = 1}^{j} k \times exp \left(\frac{- Q}{R \times {T}_{i}}\right) \times {\left(Δ{t}_{i}\right)}^{n}\end{matrix}$
where, in [Equation 2], k is a factor related to an alloying rate and has a value of 130.31, Q is a factor related to a temperature effect affecting alloying behavior depending on temperature and has a value of 62,190.89 J/mol, R is a gas constant representing a ratio of a volume of a gas to the number of moles thereof at a constant temperature and pressure in the ideal gas law and has a value of 8.314 J/(mol·K), n is a factor related to a time effect affecting the alloying rate and has a value of 0.644, j means i when Tᵢ is 550°C, Δtᵢ is a temperature measurement time interval during heating and has a value of 1 sec, i is a temperature measurement time during heating and has a positive integer value (sec), and Tᵢ means a heating temperature (K) measured at i seconds.

Y may be 0.12 or less.

Y may be 0.10 or less.

Y may be 0.01 or more.

The method may further include, after the heating, hot press forming the coated steel sheet for hot forming.

### Advantageous Effects of Invention

According to an aspect of the present disclosure, a coated steel sheet for hot forming, a method for manufacturing the same, and a method for manufacturing a hot press formed member may be provided.

According to a preferred aspect of the present disclosure, a coated steel sheet for hot forming, a method for manufacturing the same, and a method for manufacturing a hot press formed member, all of which may achieve excellent productivity as well as a reduction in manufacturing costs, may be provided.

### Brief Description of Drawings

FIG. 1 is a schematic diagram illustrating a coated steel sheet for hot forming according to a first aspect of the present disclosure.
FIG. 2 is a photograph obtained by observing a cross-section of Inventive Example 9 with a scanning electron microscope.
FIG. 3 is a photograph obtained by observing a cross-section of Comparative Example 1 with a scanning electron microscope.
FIG. 4 is a schematic diagram illustrating a coated steel sheet for hot forming according to a second aspect of the present disclosure.
FIG. 5 is a photograph obtained by observing a cross-section of Inventive Example 18 with a scanning electron microscope.
FIG. 6 is a photograph obtained by observing a cross-section of Comparative Example 7 with a scanning electron microscope.
FIG. 7 is a graph related to heating rate with respect to temperature for Inventive Examples 19 and 20.
FIG. 8 is a graph related to heating rate with respect to temperature for Comparative Examples 13 and 14.
FIG. 9 is a graph related to time and temperature during heating for Inventive Examples 19 and 20 and Comparative Examples 13 and 14.
FIG. 10 is a graph related to a cumulative value of a coating layer alloying history index with respect to temperature for Inventive Examples 19 and 20 and Comparative Examples 13 and 14.
FIG. 11 is a graph related to heating rate with respect to temperature for Comparative Example 15 and Inventive Example 21.

### Best Mode for Invention

In describing embodiments in the present disclosure, when it is determined that a detailed description of known technology related to the present disclosure may unnecessarily obscure the gist of the present disclosure, the detailed description thereof will be omitted. In addition, the terms to be described below are terms defined in consideration of functions in the present disclosure, and may vary depending on the intent or custom of a user or an operator. Accordingly, the definitions of such terms should be understood based on the contents throughout the present specification. Terms used in the detailed description are only for describing embodiments in the present disclosure and should never be construed as limiting. Unless clearly indicated otherwise, an expression in the singular form includes the meaning of the plural form.

Unless defined otherwise, all terms, including technical terms and scientific terms, used herein have the same meanings as commonly understood by those skilled in the art to which the present disclosure pertains. Terms defined in a generally used dictionary are additionally interpreted as having meanings consistent with related technical documents and the contents disclosed herein, and are not interpreted as having ideal or overly formal meanings unless otherwise defined.

In the present description, expressions such as "comprise" and "include" are intended to refer to certain features, numbers, steps, operations, elements, portions thereof, or combinations thereof, and should not be construed as excluding the presence or possibility of one or more other features, numbers, steps, operations, elements, portions thereof, or combinations thereof in addition to those described.

Unless otherwise specifically defined in the specification of the present disclosure, % refers to wt%.

Hereinafter, the present disclosure will be described in detail through each embodiment or example of the present disclosure. It should be noted that each embodiment or example described in the present specification is not limited to description only for one embodiment or example, and may also be combined with other embodiments or examples. Accordingly, the citation of claims in the claims is merely one example of an embodiment, and the technical idea of the present disclosure should not be construed as being limited only to combinations with the cited claims, and combinations with various claims are also included within the scope of the technical idea of the present disclosure.

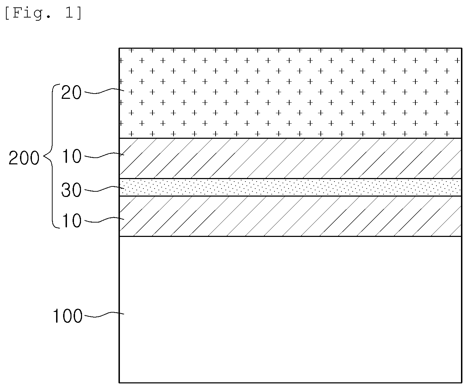

FIG. 1 is a schematic diagram illustrating a coated steel sheet for hot forming according to a first aspect of the present disclosure. Hereinafter, a coated steel sheet for hot forming according to the first aspect of the present disclosure will be described with reference to FIG. 1.

As shown in FIG. 1, the coated steel sheet for hot forming according to an embodiment in the present disclosure includes a base steel sheet 100 and a coating layer 200 formed on at least one surface of the base steel sheet 100. In the present disclosure, the type of the base steel sheet is not particularly limited, and any steel sheet commonly used in the art may be used.

The coating layer 200 may contain, by wt%, 6 to 15% of Si, 20 to 60% of Fe, and a balance of Al and other inevitable impurities.

### Si: 6 to 15%

Si serves to lower a melting point of an Al molten bath and to reduce diffusion of Fe by forming a relatively stable AlSiFe-based alloy phase. When a content of Si is less than 6%, the melting point of the molten bath increases, and a large amount of fume is generated during continuous hot-dip coating, thereby decreasing productivity and increasing line maintenance and repair costs. In addition, besides a problem in that surface defects such as surface flow patterns increase due to a decrease in fluidity of the molten bath, there is also a problem in that, as diffusion of Fe increases during hot forming, a proportion of a brittle alloy layer in the coating layer increases, resulting in peeling of the coating layer during forming and die sticking. When the content of Si exceeds 15%, the melting point of the Al molten bath increases again, causing a problem in productivity, while there is a disadvantage in that the coating layer itself becomes brittle due to crystallization of Si in the coating layer. Therefore, the content of Si is preferably in a range of 6 to 15%. The lower limit of the content of Si is advantageously 6.5%, more advantageously 7%, and most advantageously 7.5%. The upper limit of the content of Si is advantageously 13%, more advantageously 11%, and most advantageously 9%.

### Fe: 20 to 60%

Fe is released from the base steel sheet introduced into the plating bath and is contained in the coating layer, and Fe diffuses from the base steel sheet into the coating layer through a diffusion annealing heat treatment, thereby forming an Al-Fe alloy and serving to increase the melting point of the coating layer. When a content of Fe is less than 20%, formation of the Al-Fe alloy in the coating layer is insufficient, such that an Al(Si) coating layer remains, making it impossible to sufficiently increase the heating rate and prevent melting of the coating layer during a heat treatment process for hot forming. When the content of Fe exceeds 60%, there is a disadvantage in that weldability deteriorates due to a reduction in a welding current range caused by formation of an excessive diffusion layer during hot forming. Therefore, the content of Fe is preferably in a range of 20 to 60%. The lower limit of the content of Fe is advantageously 23%, more advantageously 25%, and most advantageously 28%. The upper limit of the content of Fe is advantageously 53%, more advantageously 48%, and most advantageously 45%.

The remaining component is Al. However, in a typical manufacturing process, unintended impurities may inevitably be mixed in from raw materials or the surrounding environment, and thus such impurities cannot be excluded. Since these impurities are those that may be understood by those skilled in the typical manufacturing process, all details thereof are not specifically mentioned in the present specification.

The coating layer preferably includes a first layer 10 including a Fe₂Al₅ phase and a second layer 20 formed on the first layer 10 and including a FeAl₃ phase. In general, when a diffusion annealing heat treatment is performed, Fe in the base steel sheet diffuses into the Al coating layer, and changes to FeAl₃, Fe₂Al₅, FeAl₂, and FeAl depending on the concentration of Fe. According to the present disclosure, after the coating layer is formed in a continuous hot-dip coating process, the entire coating layer becomes an Al-Fe alloy phase through only a short diffusion annealing heat treatment of 3 to 20 seconds, and thus the coating layer includes a Fe₂Al₅ phase and a FeAl₃ phase, which have low contents of Fe. The first layer 10, which is close to the base steel sheet and has a relatively high concentration of Fe, is formed as a layer including a Fe₂Al₅ phase, and the second layer 20 including a FeAl₃ phase and having a relatively low concentration of Fe is formed on the first layer 10.

It is preferable that the first layer 10 include an AlSiFe intermetallic compound (τ phase) 30 continuously or discontinuously present within the first layer 10. Although the phase of the AlSiFe intermetallic compound varies slightly depending on the concentrations of Al, Fe, and Si and thus is still difficult to clearly define, AlSiFe ternary alloy phases are generally collectively referred to as a τ phase. The AlSiFe intermetallic compound (τ phase) may have a band shape, and, since it has relatively high ductility, serves to reduce occurrence and propagation of cracks in the coating layer during the manufacturing process and to prevent excessive diffusion of Fe during hot forming. Meanwhile, the AlSiFe intermetallic compound (τ phase) is formed on a surface of the base steel sheet at a moment when the base steel sheet is introduced into the plating bath, and thereafter gradually moves from the surface into the coating layer by a diffusion annealing heat treatment. However, the AlSiFe intermetallic compound (τ phase) has a diffusion rate much lower than a diffusion rate of Fe atoms. Therefore, with only a short diffusion annealing heat treatment as in the present disclosure, the AlSiFe intermetallic compound (τ phase) cannot move to a surface of the coating layer and is present within the first layer 10.

The coating layer may have an average thickness of 7 to 30 µm. When the average thickness of the coating layer is less than 7 µm, it may be difficult to ensure sufficient corrosion resistance after hot forming. When the average thickness of the coating layer exceeds 30 µm, complete alloying through a diffusion annealing heat treatment is difficult, and thus it may be difficult to improve productivity during hot forming and prevent melting of the coating layer, which are objects of the present disclosure. Therefore, the average thickness of the coating layer may be 7 to 30 µm. The lower limit of the average thickness of the coating layer is advantageously 8 µm, more advantageously 9 µm, and most advantageously 10 µm. The upper limit of the average thickness of the coating layer is advantageously 27 µm, more advantageously 24 µm, and most advantageously 21 µm.

The coated steel sheet of the present disclosure provided as described above may have a whiteness (L value) of 60 or less and a glossiness of 6.0 or less. Through this, in a heat treatment process for hot forming, heating efficiency may be increased, such that effects of sufficiently increasing a heating rate and shortening heating time may be obtained. Meanwhile, the glossiness may be measured at a measurement angle of 60°.

Since the entire coating layer of the coated steel sheet of the present disclosure is completely alloyed, the melting point is higher than a heat treatment temperature for hot forming, and thus there is an advantage in that melting of the coating layer and sticking of Al in a heating furnace for hot forming may be prevented. In addition, since high heating efficiency is obtained in the heat treatment process for hot forming and thus there is no need for latent heat of fusion required in a melting process of the coating layer and energy consumption for AlFe alloying, an austenitizing efficiency of the steel sheet is increased, and thus material properties may be ensured even when heating time is shortened. In addition, the coated steel sheet may be implemented in a continuous hot-dip coating production line, and thus is easy to manufacture and economically advantageous. That is, excellent productivity may be achieved, and manufacturing costs may be reduced.

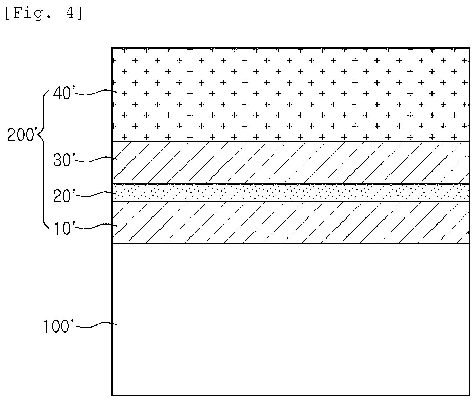

FIG. 4 is a schematic diagram illustrating a coated steel sheet for hot forming according to a second aspect of the present disclosure. Hereinafter, a coated steel sheet for hot forming according to the second aspect of the present disclosure will be described with reference to FIG. 4.

As shown in FIG. 4, the coated steel sheet for hot forming according to the second aspect of the present disclosure includes a base steel sheet 100' and a coating layer 200' formed on at least one surface of the base steel sheet 100'. In the present disclosure, the type of the base steel sheet is not particularly limited, and any steel sheet commonly used in the art may be used.

The coating layer 200' may contain, by wt%, 6 to 15% of Si, 20 to 60% of Fe, and a balance of Al and other inevitable impurities.

### Si: 6 to 15%

Si serves to lower a melting point of an Al molten bath and to reduce diffusion of Fe by forming a relatively stable AlSiFe-based alloy phase. When a content of Si is less than 6%, a melting point of the molten bath increases, and a large amount of fume is generated during continuous hot-dip coating, thereby decreasing productivity and increasing line maintenance and repair costs. In addition, besides a problem in that surface defects such as surface flow patterns increase due to a decrease in fluidity of the molten bath, there is also a problem in that, as diffusion of Fe increases during hot forming, a proportion of a brittle alloy layer in the coating layer increases, resulting in peeling of the coating layer during forming and die sticking. When the content of Si exceeds 15%, the melting point of the Al molten bath increases again, causing a problem in productivity, while there is a disadvantage in that the coating layer itself becomes brittle due to crystallization of Si in the coating layer. Therefore, the content of Si is preferably in a range of 6 to 15%. The lower limit of the content of Si is advantageously 6.5%, more advantageously 7%, and most advantageously 7.5%. The upper limit of the content of Si is advantageously 13%, more advantageously 11%, and most advantageously 9%.

### Fe: 20 to 60%

Fe is released from the base steel sheet introduced into the plating bath and is contained in the coating layer, and Fe diffuses from the base steel sheet into the coating layer through a diffusion annealing heat treatment, thereby forming an Al-Fe alloy and serving to increase the melting point of the coating layer. When a content of Fe is less than 20%, formation of the Al-Fe alloy in the coating layer is insufficient, such that an Al(Si) coating layer remains, making it impossible to sufficiently increase the heating rate and prevent melting of the coating layer during a heat treatment process for hot forming. When the content of Fe exceeds 60%, there is a disadvantage in that weldability deteriorates due to a reduction in a welding current range caused by formation of an excessive diffusion layer during hot forming. Therefore, the content of Fe is preferably in a range of 20 to 60%. The lower limit of the content of Fe is advantageously 23%, more advantageously 25%, and most advantageously 28%. The upper limit of the content of Fe is advantageously 53%, more advantageously 48%, and most advantageously 45%.

The remaining component is Al. However, in a typical manufacturing process, unintended impurities may inevitably be mixed in from raw materials or the surrounding environment, and thus such impurities cannot be excluded. Since these impurities are those that may be understood by those skilled in the typical manufacturing process, all details thereof are not specifically mentioned in the present specification.

The coating layer may include: a first layer 10' containing, by wt%, 40 to 48% of Al, 49 to 55% of Fe, and 5% or less of Si; a second layer 20' formed on the first layer 10' and containing, by wt%, 40 to 50% of Al, 38 to 48% of Fe, and 2 to 12% of Si; a third layer 30' formed on the second layer 20' and containing, by wt%, 45 to 60% of Al, 33 to 48% of Fe, and 7% or less of Si; and a fourth layer 40' formed on the third layer 30' and containing, by wt%, 50 to 65% of Al, 25 to 35% of Fe, and 15% or less of Si.

In general, when a diffusion annealing heat treatment is performed, Fe in the base steel sheet diffuses into the Al coating layer, and changes to FeAl₃, Fe₂Al₅, FeAl₂, and FeAl depending on the concentration of Fe. According to the present disclosure, after the coating layer is formed in a continuous hot-dip coating process, the entire coating layer becomes an Al-Fe alloy phase through only a short diffusion annealing heat treatment of 3 to 20 seconds, and thus the coating layer includes a Fe₂Al₅ phase and a FeAl₃ phase, which have low contents of Fe. That is, the first layer 10, which is close to the base steel sheet and has a relatively high concentration of Fe, may include a Fe₂Al₅ phase, the second layer may include an AlSiFe intermetallic compound (τ phase), the third layer may include a Fe₂Al₅ phase, and the fourth layer 40, which has a relatively low concentration of Fe, may include a FeAl₃ phase. In this case, the AlSiFe intermetallic compound (τ phase) may be present continuously or discontinuously.

The second layer may be present in a region within 40% of an overall average thickness (T) of the coating layer in a thickness direction from a lower portion of the coating layer. When the second layer is present in a region exceeding 40% of the overall average thickness (T) of the coating layer in the thickness direction from the lower portion of the coating layer, diffusion of Fe from the base steel sheet into the coating layer during hot forming cannot be suppressed, and thus over-alloying may occur, such that spot weldability may deteriorate. More advantageously, the second layer may be present in a region within 20% of the overall average thickness (T) of the coating layer in the thickness direction from the lower portion of the coating layer. In the present disclosure, a lower limit of a region in which the second layer is present is not particularly limited, but the second layer may be present in a region spaced apart by 1% or more in the thickness direction from the lower portion of the coating layer, based on the overall average thickness (T) of the coating layer.

A ratio (T1/T) of a total average thickness (T1) of the first layer, the second layer, and the third layer to an overall average thickness (T) of the coating layer may be 0.20 to 0.50. When T1/T is less than 0.20, adhesion between the base steel sheet and the coating layer may deteriorate. When T1/T exceeds 0.50, diffusion of Fe from the base steel sheet into the coating layer during hot forming cannot be suppressed, and thus over-alloying may occur, such that spot weldability may deteriorate. The lower limit of T1/T is advantageously 0.23, more advantageously 0.25, and most advantageously 0.27. The upper limit of T1/T is advantageously 0.48, more advantageously 0.46, and most advantageously 0.44.

A ratio (T2/T) of an average thickness (T2) of the fourth layer to an overall average thickness (T) of the coating layer may be 0.50 to 0.80. When T2/T is less than 0.50, diffusion of Fe into the coating layer becomes excessive, and thus spot weldability after hot forming may deteriorate. When T2/T exceeds 0.80, adhesion between the base steel sheet and the coating layer may deteriorate. The lower limit of T2/T is advantageously 0.52, more advantageously 0.54, and most advantageously 0.56. The upper limit of T2/T is advantageously 0.77, more advantageously 0.76, and most advantageously 0.73.

The coating layer may have an average thickness of 7 to 30 µm. When the average thickness of the coating layer is less than 7 µm, it may be difficult to ensure sufficient corrosion resistance after hot forming. When the average thickness of the coating layer exceeds 30 µm, complete alloying through a diffusion annealing heat treatment is difficult, and thus it may be difficult to improve productivity during hot forming and prevent melting of the coating layer, which are objects of the present disclosure. Therefore, the average thickness of the coating layer may be 7 to 30 µm. The lower limit of the average thickness of the coating layer is advantageously 8 µm, more advantageously 9 µm, and most advantageously 10 µm. The upper limit of the average thickness of the coating layer is advantageously 27 µm, more advantageously 24 µm, and most advantageously 21 µm.

The coated steel sheet of the present disclosure provided as described above may have a whiteness (L value) of 60 or less and a glossiness of 6.0 or less. Through this, in a heat treatment process for hot forming, heating efficiency may be increased, such that effects of sufficiently increasing a heating rate and shortening heating time may be obtained. Meanwhile, the glossiness may be measured at a measurement angle of 60°.

Since the entire coating layer of the coated steel sheet of the present disclosure is completely alloyed, the melting point is higher than a heat treatment temperature for hot forming, and thus there is an advantage in that melting of the coating layer and sticking of Al in a heating furnace for hot forming may be prevented. In addition, since high heating efficiency is obtained in the heat treatment process for hot forming and thus there is no need for latent heat of fusion required in a melting process of the coating layer and energy consumption for AlFe alloying, an austenitizing efficiency of the steel sheet is increased, and thus material properties may be ensured even when heating time is shortened. In addition, the coated steel sheet may be implemented in a continuous hot-dip coating production line, and thus is easy to manufacture and economically advantageous. That is, excellent productivity may be achieved, and manufacturing costs may be reduced.

Hereinafter, a method for manufacturing a coated steel sheet for hot forming according to an embodiment in the present disclosure will be described.

First, a base steel sheet is prepared. As described above, in the present disclosure, the type of the base steel sheet is not particularly limited, and any steel sheet commonly used in the art may be used.

The base steel sheet may be heat-treated in an annealing furnace in order to ensure desired material properties.

Thereafter, the base steel sheet is immersed in a plating bath to form a coating layer on at least one surface of the base steel sheet and obtain a coated steel sheet. In the present disclosure, the method for forming the coating layer is not particularly limited, and any hot-dip coating method commonly used in the art may be used. Meanwhile, the composition of the plating bath for forming the coating layer is also not particularly limited, but, for example, the plating bath may contain, by wt%, 6 to 15% of Si, 0.1 to 2.0% of Fe, and the balance of Al, and the temperature of the plating bath may be 600 to 680°C.

Thereafter, the coated steel sheet is subjected to a diffusion annealing heat treatment. The diffusion annealing heat treatment is intended to cause interdiffusion between the base steel sheet and the coating layer. The diffusion annealing heat treatment is preferably performed at 650 to 850°C for 3.0 to 20.0 seconds. When the diffusion annealing heat treatment temperature is lower than 650°C, an unalloyed coating layer remains, resulting in disadvantages in that a sufficient increase in heating rate during hot forming cannot be achieved and roll sticking in the heating furnace occurs due to melting of the residual coating layer. When the diffusion annealing heat treatment temperature is higher than 850°C, the coating layer is over-alloyed, and thus weldability may deteriorate due to an increase in a diffusion layer during hot forming. Therefore, the diffusion annealing heat treatment temperature is preferably in a range of 650 to 850°C. The lower limit of the diffusion annealing heat treatment temperature is advantageously 670°C, more advantageously 680°C, and most advantageously 690°C. The upper limit of the diffusion annealing heat treatment temperature is advantageously 830°C, more advantageously 820°C, and most advantageously 810°C. When the diffusion annealing heat treatment time is shorter than 3.0 seconds, complete alloying may be impossible when the thickness of the coating layer is large, and, as excessive heating capability is required, problems such as an increase in equipment cost and a decrease in operational safety may occur. When the diffusion annealing heat treatment time is longer than 20.0 seconds, productivity is too low, such that implementation in a continuous hot-dip coating line may be difficult and problems such as an increase in production cost may occur. Therefore, the diffusion annealing heat treatment time is preferably in a range of 3.0 to 20.0 seconds. The lower limit of the diffusion annealing heat treatment time is advantageously 4 seconds, more advantageously 4.8 seconds, and most advantageously 5.3 seconds. The upper limit of the diffusion annealing heat treatment time is advantageously 12 seconds, more advantageously 10 seconds, and most advantageously 8 seconds. Meanwhile, in the present disclosure, the heating method for the steel sheet during the diffusion annealing heat treatment is not particularly limited. However, preferably, a heating method using induction heating may be applied in order to ensure sufficient heating capability in a limited heating section of a continuous hot-dip coating line. More specifically, since heating of the steel sheet to a temperature equal to or higher than a Curie temperature is required, induction heating devices of the longitudinal or transverse flux type may be used alone or in combination in some or all heating sections.

Thereafter, the coated steel sheet subjected to the diffusion annealing heat treatment is cooled. It is preferable that the cooling includes first cooling to a first cooling end temperature of 600°C and subsequently second cooling to a second cooling end temperature lower than 600°C, and a cooling rate during the first cooling is slower than a cooling rate during the second cooling. After the diffusion annealing heat treatment, a diffusion reaction occurs up to 600°C. That is, by controlling the cooling rate during the first cooling to be lower than the cooling rate during the second cooling as described above, the heating time required for complete alloying of the coating layer may be reduced, thereby further improving productivity. When a cooling rate (C1) to a first cooling end temperature of 600°C is higher than a cooling rate (C2) to a second cooling end temperature lower than 600°C, it may be difficult to sufficiently obtain the above-described effects. In the present disclosure, the cooling rate during the cooling is not particularly limited, but, for example, the first cooling rate (C1) may be 0.9 to 21°C/s, and the second cooling rate (C2) may be 12 to 60°C/s.

Hereinafter, a method for manufacturing a hot press formed member according to an embodiment in the present disclosure will be described.

The present inventors completed the present disclosure based on the finding that, in heating a coated steel sheet for hot forming, it is important to suppress a sharp decrease in heating rate in a temperature range between 550°C and 600°C in order to shorten heating time.

First, a coated steel sheet for hot forming is prepared. The coated steel sheet for hot forming includes a base steel sheet and a coating layer formed on at least one surface of the base steel sheet.

The coated steel sheet for hot forming may satisfy one or more of the following (a) to (c).
(a) The coated steel sheet for hot forming includes: a base steel sheet; and a coating layer formed on at least one surface of the base steel sheet, and the coating layer contains, by wt%, 6 to 15% of Si, 20 to 60% of Fe, and a balance of Al and other inevitable impurities
(b) The coating layer has a single-side coating weight of 30 g/m² or less
(c) The coating layer has a whiteness of 60 or less

(a) The coated steel sheet for hot forming includes: a base steel sheet; and a coating layer formed on at least one surface of the base steel sheet, and the coating layer contains, by wt%, 6 to 15% of Si, 20 to 60% of Fe, and a balance of Al and other inevitable impurities

### Si: 6 to 15%

Si serves to make alloying with Fe uniform in the coating layer. When a content of Si is less than 6%, it may be difficult to sufficiently obtain the above-described effects. However, since Si also serves to suppress diffusion of Fe, when the content of Si exceeds 15%, diffusion of Fe may be excessively suppressed. Therefore, the content of Si is advantageously in a range of 6 to 15%. The lower limit of the content of Si is more advantageously 8%. The upper limit of the content of Si is more advantageously 12%, and still more advantageously 10%.

### Fe: 20 to 60%

Fe is an element contained in the coating layer by diffusion of Fe from the base material. When a content of Fe is less than 20%, an effect of suppressing a decrease in heating rate in a temperature range between 550°C and 600°C during heating of the aluminum coating layer may not be sufficient. When the content of Fe exceeds 60%, disadvantages such as deterioration in corrosion resistance and weldability may occur. When the content of Fe exceeds 60%, problems such as deterioration in corrosion resistance and weldability may occur. Therefore, the content of Fe is advantageously in a range of 20 to 60%. The lower limit of the content of Fe is more advantageously 25%, and still more advantageously 30%. The upper limit of the content of Fe is more advantageously 55%, and still more advantageously 50%.

### (b) The aluminum coating layer has a single-side coating weight of 30 g/m² or less

The aluminum coating layer may have a single-side coating weight of 30 g/m² or less. The coating weight is a factor that may affect an alloying rate of the aluminum coating layer. When the coating weight exceeds 30 g/m², an effect of suppressing a decrease in heating rate in a temperature range between 550°C and 600°C during heating of the aluminum coating layer may not be sufficient. Therefore, the coating weight may be 30 g/m² or less. The coating weight is more advantageously 25 g/m² or less, and still more advantageously 20 g/m² or less. Meanwhile, in the present disclosure, the lower limit of the coating weight is not particularly limited, but the lower limit of the coating weight may be 10 g/m².

### (c) The aluminum coating layer has a whiteness of 60 or less

The aluminum coating layer may have a whiteness of 60 or less. The whiteness is a factor that may affect absorption and reflection of radiant energy of the aluminum coating layer. When the whiteness exceeds 60, the effect of suppressing a decrease in heating rate in a temperature range between 550°C and 600°C during heating of the aluminum coating layer may not be sufficient. Therefore, the whiteness may be 60 or less. The whiteness is more advantageously 55 or less, and still more advantageously 50 or less. Meanwhile, in the present disclosure, the lower limit of the whiteness is not particularly limited, but the lower limit of the whiteness may be 0. The whiteness refers to an L value measured using a colorimeter commonly used in the art.

Thereafter, the prepared coated steel sheet for hot forming is heated. The heating may be performed so that X represented by the following [Equation 1] is 1.50°C/s or less. When X exceeds 1.50°C/s, there is a disadvantage in that productivity is reduced because the effect of suppressing a decrease in heating rate in a temperature range between 550°C and 600°C during heating of the aluminum coating layer is not sufficient. Therefore, X may be 1.50°C/s or less. Alternatively, X may be 1.0°C/s or less. Alternatively, X may be 0.5°C/s or less. Meanwhile, the lower limit of X is not particularly limited, but, as an example, the lower limit of X may be 0°C/s. [Equation 1] $X = A - B$
where, in [Equation 1], A is a heating rate at 600°C calculated from a straight line obtained by linearly fitting the heating rate in a temperature range between 300°C and 550°C (that is, the straight line means a linear trend line of the heating rate between 300°C and 550°C, and the heating rate at 600°C means a heating rate at 600°C when the linear trend line is extended), and B is a heating rate at 600°C calculated from a straight line obtained by linearly fitting the heating rate in a temperature range between 600°C and 700°C (that is, the straight line means a linear trend line of the heating rate between 600°C and 700°C, and the heating rate at 600°C means a heating rate at 600°C on the linear trend line).

The heating may be performed so that a cumulative value (Y) of a coating layer alloying history index at 550°C represented by the following [Equation 2] is 0.14 or less. The following [Equation 2] is a regression equation related to a decrease in heating rate during heating of the aluminum coating layer. For example, a cumulative value (Y) of a coating layer alloying history index at 550°C may be 0.14 or less. When the cumulative value (Y) of the coating layer alloying history index at 550°C exceeds 0.14, the effect of suppressing a decrease in heating rate in a temperature range between 550°C and 600°C during heating of the aluminum coating layer may not be sufficient. Therefore, the cumulative value (Y) of the coating layer alloying history index at 550°C may be 0.14 or less. The cumulative value (Y) of the coating layer alloying history index at 550°C is more advantageously 0.12 or less, and still more advantageously 0.10 or less. Meanwhile, the lower limit of the cumulative value (Y) of the coating layer alloying history index is not particularly limited, but, for example, the lower limit of the cumulative value (Y) of the coating layer alloying history index may be 0.01. The cumulative value of the coating layer alloying history index refers to the sum of coating layer alloying history index values measured at each temperature measurement time interval up to a specific measurement time. For example, when the temperature measurement time interval is 1 second, the cumulative value of the coating layer alloying history index at 10 seconds refers to the sum of the coating layer alloying history index values measured every second from 0 to 10 seconds. Meanwhile, when the temperature measurement time corresponding to a measured temperature of 550°C is not a positive integer, that is, when the temperature measurement time corresponding to a measured temperature of 550°C falls between j seconds and j+1 seconds, where j seconds is a specific temperature measurement time, the cumulative value of the coating layer alloying history index at a time between j seconds and j+1 seconds may be obtained proportionally after assuming that the cumulative value of the coating layer alloying history index changes linearly between j seconds and j+1 seconds. [Equation 2] $\begin{matrix}Cumulative value \left(Y\right) of coating layer \\ alloying history index = {\sum }_{i = 1}^{j} k \times exp \left(\frac{- Q}{R \times {T}_{i}}\right) \times {\left(Δ{t}_{i}\right)}^{n}\end{matrix}$
where, in [Equation 2], k is a factor related to an alloying rate and has a value of 130.31, Q is a factor related to a temperature effect affecting alloying behavior depending on temperature and has a value of 62,190.89 J/mol, R is a gas constant representing a ratio of a volume of a gas to the number of moles thereof at a constant temperature and pressure in the ideal gas law and has a value of 8.314 J/(mol·K), n is a factor related to a time effect affecting the alloying rate and has a value of 0.644, j means i when Tᵢ is 550°C, Δtᵢ is a temperature measurement time interval during heating and has a value of 1 sec, i is a temperature measurement time during heating and has a positive integer value (sec), and Tᵢ means a heating temperature (K) measured at i seconds. K means absolute temperature.

The method may further include, after the heating, hot press forming the coated steel sheet for hot forming. In the present disclosure, the hot press forming method is not particularly limited, and any method commonly used in the art may be used.

According to the method for manufacturing a hot press formed member according to an embodiment in the present disclosure provided as described above, in heating the coated steel sheet for hot forming, a sharp decrease in the heating rate in a temperature range between 550°C and 600°C may be suppressed. As such, improved productivity may be expected through an increase in the heating rate.

### Mode for Invention

Hereinafter, the present disclosure will be described in detail with reference to examples. However, it should be noted that the examples described below are only for illustrating the present disclosure in more detail, and are not intended to limit the scope of the present disclosure. This is because the scope of the present disclosure is determined by the matters recited in the claims and matters reasonably inferred therefrom.

### (Example 1)

A base steel sheet was immersed in a plating bath (640°C) containing, by wt%, 9.5% of Si, 1.5% of Fe, and a balance of Al and other inevitable impurities to form a coating layer on the base steel sheet, and then the coating layer was adjusted to a desired coating thickness using an air knife, thereby manufacturing a coated steel sheet. Thereafter, the coated steel sheet was subjected to a diffusion annealing heat treatment and cooling under the conditions shown in Table 1. At this time, the cooling was performed by dividing the cooling into first cooling and second cooling, and the first cooling was performed to 600°C and the second cooling was performed to 300°C. For the coated steel sheet manufactured as described above, the alloy composition of the coating layer, complete alloying of the coating layer, the average thickness of the coating layer, whiteness, and emissivity were measured. The results are shown in Table 2. At this time, the coating layer in which complete alloying was achieved included a first layer including a Fe₂Al₅ phase and a second layer formed on the first layer and including a FeAl₃ phase, and included an AlSiFe intermetallic compound (τ phase) continuously or discontinuously present within the first layer, whereas, in the coating layer in which complete alloying was not achieved, an unalloyed Si-Fe-Al-based coating layer remained on the second layer.

The alloy composition of the coating layer was measured using a wet analysis method using inductively coupled plasma (ICP).

The complete alloying of the coating layer was determined by polishing a cross-section of the coating layer and observing the polished cross-section using an optical microscope and SEM.

The average thickness of the coating layer was determined by etching the cross-section of the coating layer with a nital solution and calculating an average value at six arbitrary points using an optical microscope.

The whiteness was determined by using a colorimeter and calculating an average value at six arbitrary points on a surface of the coating layer along a width direction.

The glossiness was determined by using a gloss meter and calculating an average value at six arbitrary points on the surface of the coating layer along the width direction. At this time, the measurement angle was 60°.

**[Table 1]**

| Classification | Diffusion annealing heat treatment | | Cooling | | |
|---|---|---|---|---|---|
| | Temperature (°C) | Time (sec) | First cooling rate (°C/s) | Second cooling rate (°C/s) | Relational Expression 1 |
| Comparative Example 1 | - | - | 4.0 | 12.0 | Satisfied |
| Inventive Example 1 | 650 | 3.2 | 4.3 | 12.0 | Satisfied |
| Inventive Example 2 | 675 | 4.0 | 5.7 | 16.0 | Satisfied |
| Inventive Example 3 | 700 | 4.8 | 7.1 | 20.0 | Satisfied |
| Inventive Example 4 | 725 | 5.3 | 8.5 | 24.0 | Satisfied |
| Inventive Example 5 | 750 | 6.0 | 10. | 28.0 | Satisfied |
| Inventive Example 6 | 775 | 6.9 | 11.4 | 32.0 | Satisfied |
| Inventive Example 7 | 800 | 9.6 | 12.8 | 36.0 | Satisfied |
| Inventive Example 8 | 825 | 12.0 | 14.3 | 40.0 | Satisfied |
| Inventive Example 9 | 850 | 16.0 | 17.0 | 48.0 | Satisfied |
| Comparative Example 2 | 825 | 12.0 | 40.0 | 14.3 | Not satisfied |
| Comparative Example 3 | 775 | 6.9 | 20.0 | 7.1 | Not satisfied |
| Comparative Example 4 | 750 | 4.0 | 28.0 | 10.0 | Not satisfied |
| Comparative Example 5 | 725 | 4.0 | 8.5 | 2.4 | Not satisfied |
| Comparative | 700 | 4.8 | 20.0 | 7.1 | Not satisfied |
| Example 6 | | | | | |
| [Relational Expression 1] Cooling rate during first cooling < Cooling rate during second cooling | | | | | |

**[Table 2]**

| Classification | Alloy composition of coating layer (wt%) | | | Complete alloying of coating layer | Average thickness of coating layer (µm) | Whiteness (L value) | Glossiness |
|---|---|---|---|---|---|---|---|
| | Si | Fe | Al | | | | |
| Comparative Example 1 | 8.9 | 19 | Balance | × | 5.1 | 70.8 | 9.2 |
| Inventive Example 1 | 6 | 23 | Balance | ○ | 7.2 | 50.5 | 2.5 |
| Inventive Example 2 | 6.3 | 26 | Balance | ○ | 8.5 | 52.5 | 2.5 |
| Inventive Example 3 | 6.6 | 29 | Balance | ○ | 10.1 | 56.7 | 5.5 |
| Inventive Example 4 | 7 | 31 | Balance | ○ | 11.8 | 58.3 | 5.4 |
| Inventive Example 5 | 7 | 33 | Balance | ○ | 13.9 | 58.7 | 5.7 |
| Inventive Example 6 | 7.6 | 39 | Balance | ○ | 16.2 | 59.0 | 5.6 |
| Inventive Example 7 | 7.8 | 41 | Balance | ○ | 19.4 | 58.6 | 5.8 |
| Inventive Example 8 | 7.5 | 43 | Balance | ○ | 24.2 | 60.0 | 5.8 |
| Inventive Example 9 | 7.6 | 22 | Balance | ○ | 30.0 | 60.0 | 6.0 |
| Comparative Example 2 | 9.1 | 15 | Balance | × | 21.0 | 83.0 | 52.9 |
| Comparative Example 3 | 7.8 | 19 | Balance | × | 15.6 | 61.5 | 63.9 |
| Comparative Example 4 | 8.6 | 17 | Balance | × | 12.2 | 76.3 | 69.3 |
| Comparative Example 5 | 7.9 | 18 | Balance | × | 10.6 | 70.8 | 70.8 |
| Comparative Example 6 | 7.7 | 19 | Balance | × | 9.7 | 62.3 | 9.2 |

As shown in Tables 1 and 2, in Inventive Examples 1 to 9 satisfying the conditions of the present disclosure, the coating layer was completely alloyed, and the values of the whiteness and glossiness were also low. These values are at extremely low levels compared with those of a general Al-Si-based coating layer.

In contrast, in Comparative Examples 1 to 6 not satisfying the conditions of the present disclosure, the coating layer was not completely alloyed, and the values of the whiteness and glossiness were also high.

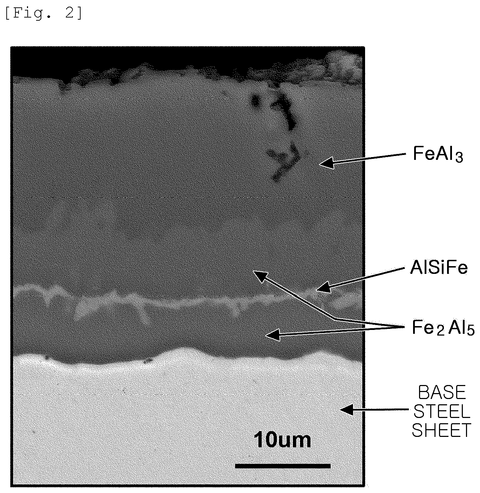

FIG. 2 is a photograph obtained by observing a cross-section of Inventive Example 9 with a scanning electron microscope. As shown in FIG. 2, in Inventive Example 9, it was confirmed that the coating layer was completely alloyed, the coating layer included a first layer including a Fe₂Al₅ phase and a second layer formed on the first layer and including a FeAl₃ phase, and an AlSiFe intermetallic compound (τ phase) was continuously present within the first layer.

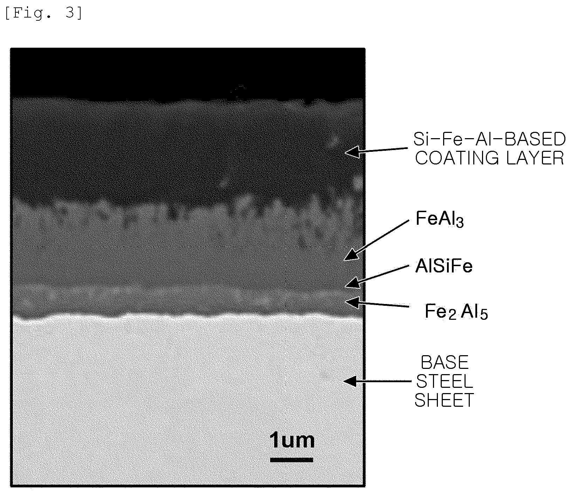

FIG. 3 is a photograph obtained by observing a cross-section of Comparative Example 1 with a scanning electron microscope. As shown in FIG. 3, in Comparative Example 1, it was confirmed that the coating layer included a first layer including a Fe₂Al₅ phase and a second layer formed on the first layer and including a FeAl₃ phase, but an AlSiFe intermetallic compound (τ phase) discontinuously present on an upper portion of the first layer was formed, and an unalloyed Si-Fe-Al-based coating layer remained on the second layer due to incomplete alloying of the coating layer.

### (Example 2)

A base steel sheet was immersed in a plating bath (680°C) containing, by wt%, 9.5% of Si, 1.5% of Fe, and a balance of Al and other inevitable impurities to form a coating layer on the base steel sheet, and then the coating layer was adjusted to a desired coating thickness through an Air Knife, thereby manufacturing a coated steel sheet. Thereafter, the coated steel sheet was subjected to a diffusion annealing heat treatment and cooling under the conditions shown in Table 3. At this time, the cooling was performed by dividing the cooling into first cooling and second cooling, and the first cooling was performed to 600°C and the second cooling was performed to 300°C. For the coated steel sheet manufactured as described above, the alloy composition of the coating layer, complete alloying of the coating layer, the average thickness of the coating layer, whiteness, and emissivity were measured. The results are shown in Tables 4 to 6. At this time, the coating layer in which complete alloying was achieved included a first layer including a Fe₂Al₅ phase, a second layer formed on the first layer and including an AlSiFe intermetallic compound (τ phase), a third layer formed on the second layer and including a Fe₂Al₅ phase, and a fourth layer formed on the third layer and including a FeAl₃ phase, and, in the coating layer in which complete alloying was not achieved, an unalloyed Al-Si-based coating layer remained on the fourth layer.

The alloy composition of the coating layer was measured using a wet analysis method using inductively coupled plasma-atomic emission spectroscopy (ICP-AES).

The complete alloying of the coating layer was determined by polishing a cross-section of the coating layer and observing the polished cross-section using an optical microscope and SEM.

The average thickness of the coating layer was determined by etching the cross-section of the coating layer with a nital solution and calculating an average value at six arbitrary points using an optical microscope.

The whiteness was determined by using a colorimeter and calculating an average value at six arbitrary points on a surface of the coating layer along a width direction.

The glossiness was determined by using a gloss meter and calculating an average value at six arbitrary points on the surface of the coating layer along the width direction. At this time, the measurement angle was 60°.

**[Table 3]**

| Classification | Diffusion annealing heat treatment | | Cooling | | |
|---|---|---|---|---|---|
| | Temperature (°C) | Time (sec) | First cooling rate (°C/s) | Second cooling rate (°C/s) | Relational Expression 1 |
| Comparative Example 7 | - | - | 4.0 | 12.0 | Satisfied |
| Inventive Example 10 | 650 | 3.2 | 4.3 | 12.0 | Satisfied |
| Inventive Example 11 | 675 | 4.0 | 5.7 | 16.0 | Satisfied |
| Inventive Example 12 | 700 | 4.8 | 7.1 | 20.0 | Satisfied |
| Inventive Example 13 | 725 | 5.3 | 8.5 | 24.0 | Satisfied |
| Inventive Example 14 | 750 | 6.0 | 10. | 28.0 | Satisfied |
| Inventive Example 15 | 775 | 6.9 | 11.4 | 32.0 | Satisfied |
| Inventive Example 16 | 800 | 9.6 | 12.8 | 36.0 | Satisfied |
| Inventive Example 17 | 825 | 12.0 | 14.3 | 40.0 | Satisfied |
| Inventive Example 18 | 850 | 16.0 | 17.0 | 48.0 | Satisfied |
| Comparative Example 8 | 825 | 12.0 | 40.0 | 14.3 | Not satisfied |
| Comparative Example 9 | 775 | 6.9 | 20.0 | 7.1 | Not satisfied |
| Comparative Example 10 | 750 | 4.0 | 28.0 | 10.0 | Not satisfied |
| Comparative Example 11 | 725 | 4.0 | 8.5 | 2.4 | Not satisfied |
| Comparative Example 12 | 700 | 4.8 | 20.0 | 7.1 | Not satisfied |
| [Relational Expression 1] Cooling rate during first cooling < Cooling rate during second cooling | | | | | |

**[Table 4]**

| Classification | Alloy composition of coating layer (wt%) | | | Complete alloying of coating layer | Alloy composition of first layer (wt%) | | |
|---|---|---|---|---|---|---|---|
| | Si | Fe | Al | | Si | Fe | Al |
| Comparative Example 7 | 8.9 | 19 | Balance | × | 11.5 | 34.8 | 53.7 |
| Inventive Example 10 | 6 | 23 | Balance | ○ | 4.5 | 49.3 | 46.2 |
| Inventive Example 11 | 6.3 | 26 | Balance | ○ | 4.3 | 49.6 | 46.1 |
| Inventive Example 12 | 6.6 | 29 | Balance | ○ | 3.8 | 50.2 | 46.0 |
| Inventive Example 13 | 7 | 31 | Balance | ○ | 3.5 | 51.1 | 45.4 |
| Inventive Example 14 | 7 | 33 | Balance | ○ | 3.2 | 52.1 | 44.7 |
| Inventive Example 15 | 7.6 | 39 | Balance | ○ | 2.9 | 53.2 | 43.9 |
| Inventive Example 16 | 7.8 | 41 | Balance | ○ | 2.5 | 54.1 | 43.4 |
| Inventive Example 17 | 7.5 | 43 | Balance | ○ | 2.2 | 55 | 42.8 |
| Inventive Example 18 | 7.6 | 22 | Balance | ○ | 1.9 | 55 | 43.1 |
| Comparative Example 8 | 9.1 | 15 | Balance | × | 11.2 | 32.5 | 56.3 |
| Comparative Example 9 | 7.8 | 19 | Balance | × | 2.6 | 44 | 53.4 |
| Comparative Example 10 | 8.6 | 17 | Balance | × | 2.5 | 46.4 | 51.1 |
| Comparative Example 11 | 7.9 | 18 | Balance | × | 2 | 47.4 | 50.6 |
| Comparative Example 12 | 7.7 | 19 | Balance | × | 3.4 | 45 | 51.6 |

**[Table 5]**

| Classification | Second layer | | | Third layer | | | Fourth layer | | |
|---|---|---|---|---|---|---|---|---|---|
| | Si | Fe | Al | Si | Fe | Al | Si | Fe | Al |
| Comparative Example 7 | 7.7 | 44.7 | 47.6 | 11.5 | 34.8 | 53.7 | 0 | 1.9 | 98.1 |
| Inventive Example 10 | 2.2 | 48 | 49.8 | 6.5 | 33.7 | 59.8 | 14.2 | 25.5 | 60.3 |
| Inventive Example 11 | 2.8 | 47.9 | 49.3 | 4.2 | 35.8 | 60.0 | 5.1 | 34.2 | 60.7 |
| Inventive Example 12 | 6.5 | 44.6 | 48.9 | 2.9 | 40.5 | 56.6 | 4.3 | 30.7 | 65 |
| Inventive Example 13 | 6.2 | 45.8 | 48 | 3.1 | 42.3 | 54.6 | 4.5 | 33.1 | 62.4 |
| Inventive Example 14 | 8.3 | 42.4 | 49.3 | 3.6 | 44.2 | 52.2 | 7.8 | 29.3 | 62.9 |
| Inventive Example 15 | 8.6 | 42.2 | 49.2 | 2.8 | 48 | 49.2 | 6.2 | 30.5 | 63.3 |
| Inventive Example 16 | 10.4 | 43.6 | 46 | 4.8 | 46.3 | 48.9 | 10.8 | 31.5 | 57.7 |
| Inventive Example 17 | 11.8 | 41.3 | 46.9 | 5.7 | 47.2 | 47.1 | 13.1 | 34 | 52.9 |
| Inventive Example 18 | 12 | 47.6 | 40.4 | 6.4 | 48 | 45.6 | 14.5 | 34.3 | 51.2 |
| Comparative Example 8 | 10.9 | 44.7 | 44.4 | 11.5 | 55.1 | 33.4 | 3.2 | 0 | 96.8 |
| Comparative Example 9 | 10.8 | 42.1 | 47.1 | 12.6 | 56.1 | 31.3 | 0.2 | 2 | 97.8 |
| Comparative Example 10 | 9.5 | 43.7 | 46.8 | 12.2 | 32 | 55.8 | 3.3 | 3.6 | 93.1 |
| Comparative Example 11 | 4.6 | 44.1 | 51.3 | 4.4 | 39.3 | 56.3 | 10.3 | 28.8 | 60.9 |
| Comparative Example 12 | 10 | 44.1 | 45.9 | 3.4 | 45 | 51.6 | 9.4 | 23.8 | 66.8 |

**[Table 6]**

| Classification | Overall average thickness of coating layer (T) (µm) | Ratio (T1/T) of total average thickness (T1) of first layer, second layer, and third layer to overall average thickness (T) of coating layer | Ratio (T2/T) of average thickness (T2) of fourth layer to overall average thickness (T) of coating layer | Whiteness (L value) | Glossiness |
|---|---|---|---|---|---|
| Comparative Example 7 | 5.1 | 0.29 | 0.71 | 70.8 | 9.2 |
| Inventive Example 10 | 7.2 | 0.5 | 0.5 | 50.5 | 2.5 |
| Inventive Example 11 | 8.5 | 0.44 | 0.56 | 52.5 | 2.5 |
| Inventive Example 12 | 10.1 | 0.43 | 0.57 | 56.7 | 5.5 |
| Inventive Example 13 | 11.8 | 0.41 | 0.59 | 58.3 | 5.4 |
| Inventive Example 14 | 13.9 | 0.39 | 0.61 | 58.7 | 5.7 |
| Inventive Example 15 | 16.2 | 0.35 | 0.65 | 59.0 | 5.6 |
| Inventive Example 16 | 19.4 | 0.32 | 0.68 | 58.6 | 5.8 |
| Inventive Example 17 | 24.2 | 0.3 | 0.7 | 60.0 | 5.8 |
| Inventive Example 18 | 30.0 | 0.27 | 0.73 | 60.0 | 6.0 |
| Comparative Example 8 | 21.0 | 0.42 | 0.58 | 83.0 | 52.9 |
| Comparative Example 9 | 15.6 | 0.55 | 0.45 | 61.5 | 63.9 |
| Comparative Example 10 | 12.2 | 0.57 | 0.43 | 76.3 | 69.3 |
| Comparative Example 11 | 10.6 | 0.22 | 0.78 | 70.8 | 70.8 |
| Comparative Example 12 | 9.7 | 0.20 | 0.8 | 62.3 | 9.2 |

As shown in Tables 3 to 6, in Inventive Examples 10 to 18 satisfying the manufacturing conditions of the present disclosure, the coating layer was completely alloyed, and, since first, second, third, and fourth layers having appropriate contents of Al, Fe, and Si were formed, the values of the whiteness and glossiness were also low. This is a markedly superior level compared with that of a general Al-Si-based coating layer. In contrast, in Comparative Examples 7 to 12 not satisfying the manufacturing conditions of the present disclosure, the coating layer was not completely alloyed, and, since first, second, third, and fourth layers having appropriate contents of Al, Fe, and Si were not formed, the values of the whiteness and glossiness were high.

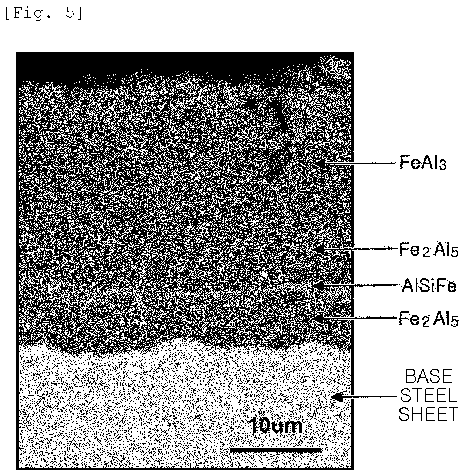

FIG. 5 is a photograph obtained by observing a cross-section of Inventive Example 18 with a scanning electron microscope. As shown in FIG. 5, in Inventive Example 18, it was confirmed that the coating layer was completely alloyed, and the coating layer included a first layer including a Fe₂Al₅ phase, a second layer formed on the first layer and including an AlSiFe intermetallic compound (τ phase) continuously present therein, a third layer formed on the second layer and including a Fe₂Al₅ phase, and a fourth layer formed on the third layer and including a FeAl₃ phase.

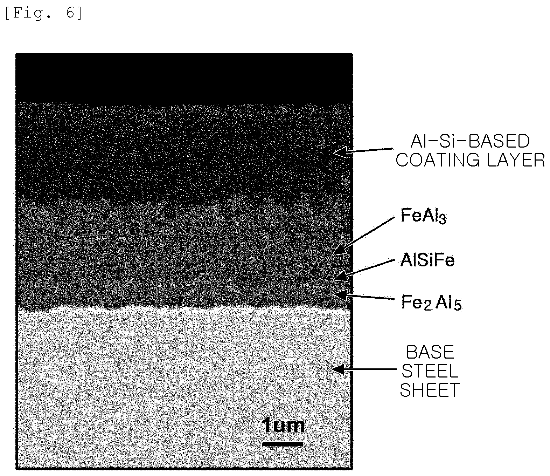

FIG. 6 is a photograph obtained by observing a cross-section of Comparative Example 7 with a scanning electron microscope. As shown in FIG. 6, in Comparative Example 7, it was confirmed that the coating layer included a first layer including a Fe₂Al₅ phase, a second layer formed on the first layer and including an AlSiFe intermetallic compound (τ phase) discontinuously present therein, and a fourth layer formed on the third layer and including a FeAl₃ phase, and an unalloyed Al-Si-based coating layer remained on the fourth layer due to incomplete alloying of the coating layer.

### (Example 3)

First, a coated steel sheet for hot forming having a steel sheet thickness shown in Table 7 was prepared, the coated steel sheet including an aluminum-based coating layer formed on both surfaces of a base steel sheet and having the alloy composition, whiteness, and single-side coating weight shown in Table 7. Thereafter, the coated steel sheet for hot forming was heated from room temperature to 935°C. For the coated steel sheet for hot forming heated as described above, the value of [Equation 1] and the value of [Equation 2] at 550°C were measured. The results are shown in Table 7.

The value of [Equation 1] was obtained, for each coated steel sheet for hot forming, by obtaining a graph related to heating rate with respect to temperature and then linearly fitting the heating rate in a temperature range between 300°C and 550°C and linearly fitting the heating rate in a temperature range between 600°C and 700°C, and the fitting was performed using a linear fitting method of Excel.

In addition, after measuring temperature for each coated steel sheet for hot forming with a temperature measurement time interval set to 1 second, the cumulative value of [Equation 2] at 550°C was calculated.

**[Table 7]**

| Classification | Alloy composition (wt%) | | | Whiteness (L) | Single-side coating weight (g/m²) | Steel sheet thickness (mm) | [Equation 1] | [Equation 2] |
|---|---|---|---|---|---|---|---|---|
| | Si | Fe | Al | | | | | |
| Comparative Example 13 | 9 | 3 | 88 | 84 | 75 | 1.4 | 1.98 | 0.16 |
| Comparative Example 14 | 9 | 3 | 88 | 77 | 75 | 1.4 | 1.82 | 0.17 |
| Inventive Example 19 | 9 | 40 | 51 | 50 | 75 | 1.4 | 0.38 | 0.12 |
| Inventive Example 20 | 9 | 40 | 51 | 45 | 75 | 1.4 | 0.14 | 0.11 |
| Comparative Example 15 | 9 | 3 | 88 | 80 | 40 | 1.2 | 1.75 | 0.14 |
| Inventive Example 21 | 9 | 3 | 88 | 86 | 30 | 1.2 | 0.48 | 0.18 |
| [Equation 1] X = A - B | | | | | | | | |
| (where, in [Equation 1], A is a heating rate at 600°C calculated from a straight line obtained by linearly fitting the heating rate in a temperature range between 300°C and 550°C, and B is a heating rate at 600°C calculated from a straight line obtained by linearly fitting the heating rate in a temperature range between 600°C and 700°C) | | | | | | | | |
| [Equation 2] Cumulative value (Y) of coating layer alloying history index $= {\sum }_{i = 1}^{j} k \times exp \left(\frac{- Q}{R \times {T}_{i}}\right) \times {\left(Δ{t}_{i}\right)}^{n}$ | | | | | | | | |
| (where, in [Equation 2], k is a factor related to an alloying rate and has a value of 130.31, Q is a factor related to a temperature effect affecting alloying behavior depending on temperature and has a value of 62,190.89 J/mol, R is a gas constant representing a ratio of a volume of a gas to the number of moles thereof at a constant temperature and pressure in the ideal gas law and has a value of 8.314 J/(mol·K), n is a factor related to a time effect affecting the alloying rate and has a value of 0.644, Δtᵢ is a temperature measurement time interval during heating and has a value of 1 sec, i is a temperature measurement time during heating and has a positive integer value (sec), and Tᵢ means a heating temperature (K) measured at i seconds) | | | | | | | | |

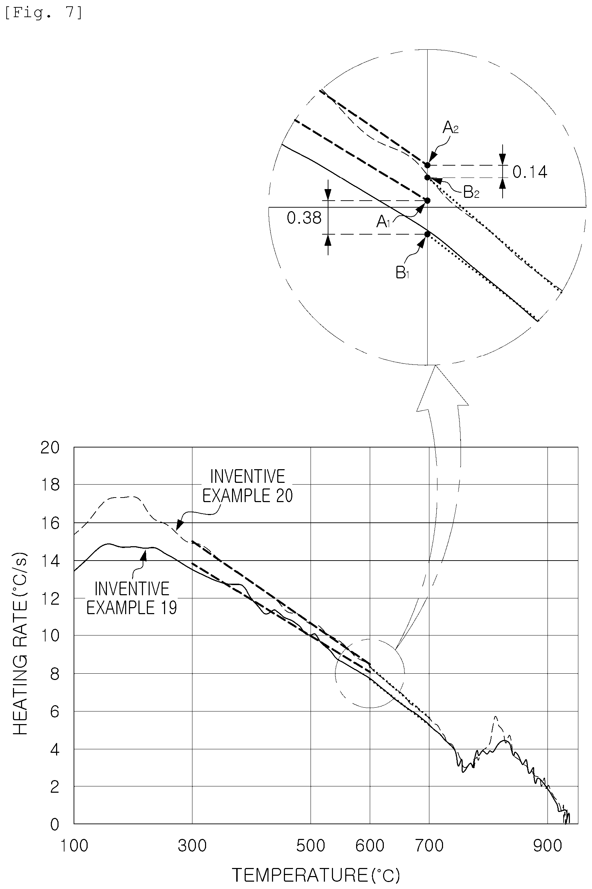

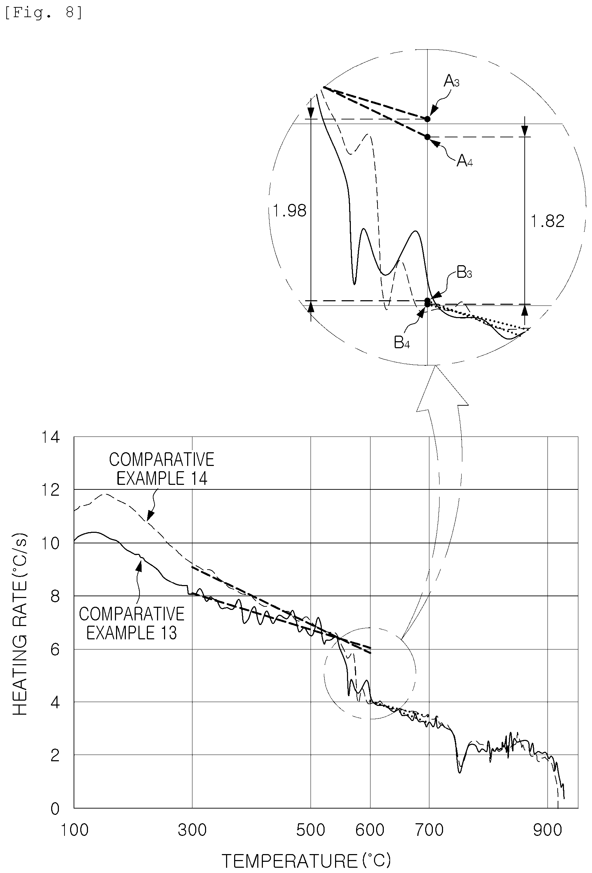

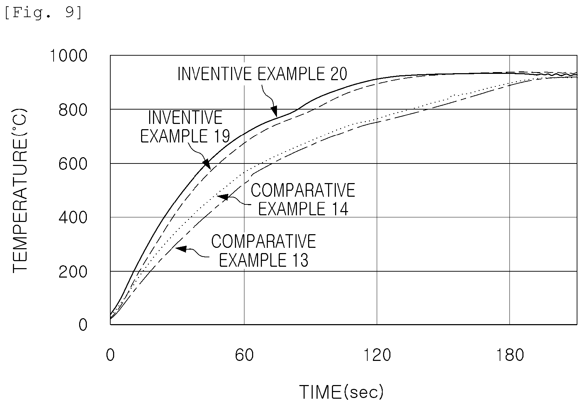

FIG. 7 is a graph related to heating rate with respect to temperature for Inventive Examples 19 and 20. FIG. 8 is a graph related to heating rate with respect to temperature for Comparative Examples 13 and 14. FIG. 9 is a graph related to time and temperature during heating for Inventive Examples 19 and 20 and Comparative Examples 13 and 14.

As shown in Table 7 and FIGS. 7 to 9, it was confirmed that, in Comparative Examples 13 and 14, the heating rate sharply decreased in a temperature range between 550°C and 600°C, whereas, in Inventive Examples 19 and 20, a sharp decrease in the heating rate did not occur in the temperature range between 550°C and 600°C, and, due thereto, the time required to reach 935°C in Inventive Examples 19 and 20 was much shorter than that in Comparative Examples 13 and 14. Meanwhile, in FIG. 7, A and B of Inventive Example 19 are shown as A₁ and B₁, respectively, and A and B of Inventive Example 20 are shown as A₂ and B₂, respectively, and, in FIG. 8, A and B of Comparative Example 13 are shown as A₃ and B₃, respectively, and A and B of Comparative Example 14 are shown as A₄ and B₄, respectively.

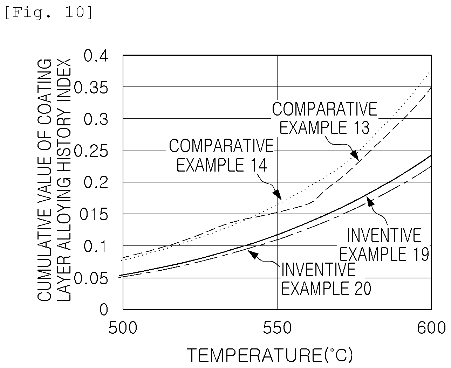

FIG. 10 is a graph related to a cumulative value of a coating layer alloying history index with respect to temperature for Inventive Examples 19 and 20 and Comparative Examples 13 and 14. As shown in FIG. 10, it was confirmed that the cumulative value of the coating layer alloying history index at 550°C in Comparative Examples 13 and 14 exceeded 0.30, whereas the cumulative value of the coating layer alloying history index at 550°C in Inventive Examples 19 and 20 was 0.30 or less.

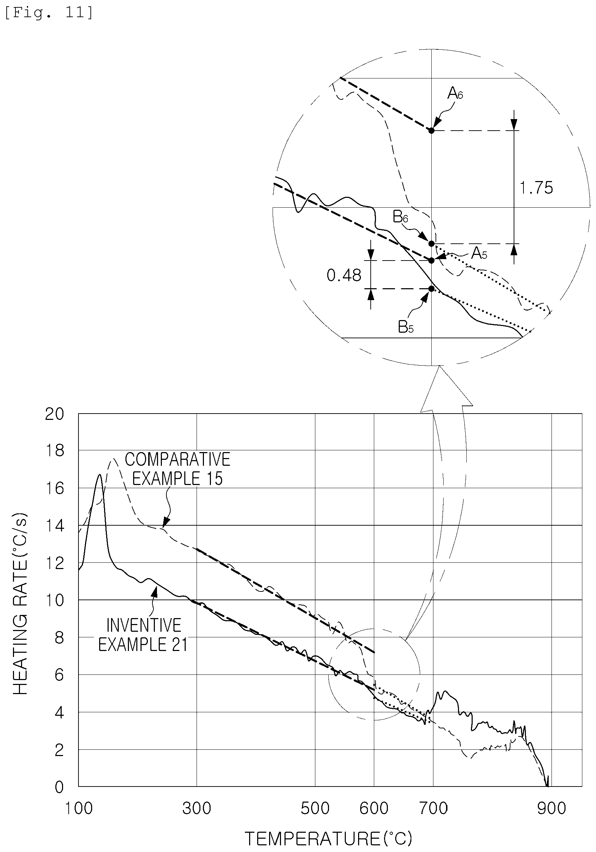

FIG. 11 is a graph related to heating rate with respect to temperature for Comparative Example 15 and Inventive Example 21. As shown in FIG. 11, it was confirmed that, in Comparative Example 15, the heating rate sharply decreased in a temperature range between 550°C and 600°C, whereas, in Inventive Example 21, a sharp decrease in the heating rate did not occur in the temperature range between 550°C and 600°C. Meanwhile, in FIG. 11, A and B of Inventive Example 21 are shown as A₅ and B₅, respectively, and A and B of Comparative Example 15 are shown as A₆ and B₆, respectively.

### [Description of Reference Characters]

10: First layer
20: Second layer
30: AlSiFe Intermetallic Compound (τ phase)
100: Base steel sheet
200: Coating Layer
10': First Layer
20': Second Layer
30': Third Layer
40': Fourth Layer
100': Base Steel Sheet
200': Coating Layer

## Claims

1. A coated steel sheet for hot forming, comprising:
a base steel sheet; and
a coating layer formed on at least one surface of the base steel sheet,
wherein the coating layer includes:
a first layer containing, by wt%, 40 to 48% of Al, 49 to 55% of Fe, and 5% or less of Si;
a second layer formed on the first layer and containing, by wt%, 40 to 50% of Al, 38 to 48% of Fe, and 2 to 12% of Si;
a third layer formed on the second layer and containing, by wt%, 45 to 60% of Al, 33 to 48% of Fe, and 7% or less of Si; and
a fourth layer formed on the third layer and containing, by wt%, 50 to 65% of Al, 25 to 35% of Fe, and 15% or less of Si.

2. The coated steel sheet of claim 1, wherein the coating layer contains, by wt%, 6 to 15% of Si, 20 to 60% of Fe, and a balance of Al and other inevitable impurities.

3. The coated steel sheet of claim 1, wherein the first layer includes a Fe₂Al₅ phase,
the second layer includes an AlSiFe intermetallic compound (τ phase),
the third layer includes a Fe₂Al₅ phase, and
the fourth layer includes a FeAl₃ phase.

4. The coated steel sheet of claim 1, wherein the second layer is present in a region within 40% of an overall average thickness (T) of the coating layer in a thickness direction from a lower portion of the coating layer.

5. The coated steel sheet of claim 1, wherein a ratio (T1/T) of a total average thickness (T1) of the first layer, the second layer, and the third layer to an overall average thickness (T) of the coating layer is 0.20 to 0.50.

6. The coated steel sheet of claim 1, wherein a ratio (T2/T) of an average thickness (T2) of the fourth layer to an overall average thickness (T) of the coating layer is 0.50 to 0.80.

7. The coated steel sheet of claim 1, wherein the coating layer has an average thickness of 7 to 30 µm.

8. The coated steel sheet of claim 1, wherein the coating layer has a whiteness of 60 or less and a glossiness of 6.0 or less.

9. A method for manufacturing a coated steel sheet for hot forming, the method comprising:
preparing a base steel sheet;
immersing the base steel sheet in a plating bath to form a coating layer on at least one surface of the base steel sheet and obtain a coated steel sheet;
subjecting the coated steel sheet to a diffusion annealing heat treatment; and
cooling the coated steel sheet subjected to the diffusion annealing heat treatment,
wherein the diffusion annealing heat treatment is performed at 650 to 850°C for 3.0 to 20.0 seconds,
the cooling includes first cooling to a first cooling end temperature of 600°C and subsequently second cooling to a second cooling end temperature lower than 600°C, and
a cooling rate during the first cooling is slower than a cooling rate during the second cooling.

10. The method of claim 9, wherein the plating bath contains, by wt%, 6 to 15% of Si, 0.1 to 2.0% of Fe, and a balance of Al and other inevitable impurities.

11. The method of claim 9, wherein the diffusion annealing heat treatment is performed by induction heating.

12. The method of claim 9, wherein the cooling rate during the first cooling is 0.9 to 21°C/s, and the cooling rate during the second cooling is 12 to 60°C/s.

13. A method for manufacturing a hot press formed member, the method comprising heating a coated steel sheet for hot forming,
wherein the heating is performed so that X represented by the following [Equation 1] is 1.50°C/s or less: [Equation 1] $X = A - B$
where, in [Equation 1], A is a heating rate at 600°C calculated from a straight line obtained by linearly fitting the heating rate in a temperature range between 300°C and 550°C, and B is a heating rate at 600°C calculated from a straight line obtained by linearly fitting the heating rate in a temperature range between 600°C and 700°C.

14. The method of claim 13, wherein the coated steel sheet for hot forming satisfies one or more of the following (a) to (c):
(a) the coated steel sheet for hot forming includes: a base steel sheet; and a coating layer formed on at least one surface of the base steel sheet, and the coating layer contains, by wt%, 6 to 15% of Si, 20 to 60% of Fe, and a balance of Al and other inevitable impurities;
(b) the coating layer has a single-side coating weight of 30 g/m² or less; and
(c) the coating layer has a whiteness of 60 or less.

15. The method of claim 13, wherein X is 0°C/s or more and 1.50°C/s or less.

16. The method of any one of claims 13 to 15, wherein the heating is performed so that a cumulative value (Y) of a coating layer alloying history index at 550°C represented by the following [Equation 2] is 0.14 or less: [Equation 2] $\begin{matrix}Cumulative value \left(Y\right) of coating layer alloying \\ history index = {\sum }_{i = 1}^{j} k \times exp \left(\frac{- Q}{R \times {T}_{i}}\right) \times {\left(Δ{t}_{i}\right)}^{n}\end{matrix}$ where, in [Equation 2], k is a factor related to an alloying rate and has a value of 130.31, Q is a factor related to a temperature effect affecting alloying behavior depending on temperature and has a value of 62,190.89 J/mol, R is a gas constant representing a ratio of a volume of a gas to the number of moles thereof at a constant temperature and pressure in the ideal gas law and has a value of 8.314 J/(mol·K), n is a factor related to a time effect affecting the alloying rate and has a value of 0.644, j means i when Tᵢ is 550°C, Δtᵢ is a temperature measurement time interval during heating and has a value of 1 sec, i is a temperature measurement time during heating and has a positive integer value (sec), and Tᵢ means a heating temperature (K) measured at i seconds.

17. The method of claim 13, wherein Y is 0.12 or less.

18. The method of claim 13, wherein Y is 0.10 or less.

19. The method of claim 13, wherein Y is 0.01 or more.

20. The method of claim 13, further comprising, after the heating, hot press forming the coated steel sheet for hot forming.
